# EUROPÄISCHE PATENTSCHRIFT

(11) **EP 4 014 825 B1**
(45) Veröffentlichungstag und Bekanntmachung des Hinweises auf die Patenterteilung: **10.05.2023**
(21) Anmeldenummer: 21214415.8
(22) Anmeldetag: 14.12.2021
(51) Int. Cl.: A47L 9/28

(54) **VERFAHREN ZUM BETRIEB EINES SICH SELBSTTÄTIG FORTBEWEGENDEN BODENBEARBEITUNGSGERÄTES**
METHOD OF OPERATING A SELF-PROPELLED SOIL CULTIVATING IMPLEMENT
PROCÉDÉ DE FONCTIONNEMENT D'UN APPAREIL DE TRAITEMENT DU SOL AUTONOME

(30) Priorität: 21.12.2020 DE 102020134400
(43) Veröffentlichungstag der Anmeldung: 22.06.2022
(73) Patentinhaber: Vorwerk & Co. Interholding GmbH, 42275 Wuppertal (DE)
(72) Erfinder: Mosebach, Andrej, 59425 Unna (DE); Hayn, Henning, 40723 Hilden (DE)
(74) Vertreter: Müller, Enno

(56) Entgegenhaltungen:
- DE-A1-102017 109 219
- US-A1- 2014 207 282

## Beschreibung

### Gebiet der Technik

Die Erfindung betrifft ein Verfahren zum Betrieb eines sich selbsttätig fortbewegenden Bodenbearbeitungsgerätes, wobei mindestens eine von dem Bodenbearbeitungsgerät in einer Umgebung auszuführende Bodenbearbeitungstätigkeit zur Ausführung in einem durch einen definierten Startzeitpunkt und eine definierte Zeitspanne gekennzeichneten ersten Zeitfenster vorgeplant wird, wobei für den Fall, dass das erste Zeitfenster nicht für die vollständige Ausführung der Bodenbearbeitungstätigkeit ausreicht, mindestens ein zweites Zeitfenster vorgeplant wird, in welchem das Bodenbearbeitungsgerät die Ausführung der Bodenbearbeitungstätigkeit fortsetzt, wobei die bei Ablauf des ersten Zeitfensters nicht fertiggestellte Bodenbearbeitungstätigkeit zum Ende der definierten Zeitspanne des ersten Zeitfensters angehalten wird und bei Erreichen eines für das zweite Zeitfenster vordefinierten Startzeitpunktes fortgesetzt wird, wobei mehrere Bodenbearbeitungstätigkeiten im Rahmen eines Bearbeitungsplans definiert werden, welcher eine Reihenfolge der auszuführenden Bodenbearbeitungstätigkeiten festlegt.

### Stand der Technik

Sich selbsttätig fortbewegende Bodenbearbeitungsgeräte sowie Verfahren zu deren Betrieb sind im Stand der Technik in unterschiedlichen Ausführungsformen bekannt. Derartige Bodenbearbeitungsgeräte sind beispielsweise Reinigungsgeräte, Poliergeräte, Bohnergeräte oder ähnliche. Im Sinne von Reinigungsgeräten sind beispielsweise Saugreinigungsgeräte, Wischreinigungsgeräte und andere bekannt. Diese Bodenbearbeitungsgeräte werden sowohl in häuslichen Umgebungen, als auch in gewerblich genutzten Umgebungen, beispielsweise Bürogebäuden, Lagerräumen, Verkaufsräumen oder anderen eingesetzt.

Es ist bekannt, von dem Bodenbearbeitungsgerät auszuführende Bodenbearbeitungstätigkeiten im Voraus zu planen, beispielsweise mittels einer Kalenderapplikation, die feste Termine für eine oder mehrere Bodenbearbeitungstätigkeiten verwalten kann. Die Termine sind definiert durch einen definierten Startzeitpunkt und eine definierte Zeitspanne, d.h. Dauer, die zur Ausführung der Bodenbearbeitungstätigkeit zur Verfügung steht. Durch die Zeitspanne ist gleichzeitig auch ein Endzeitpunkt definiert, zu welchem die Bodenbearbeitungstätigkeit zu beenden ist. Für eine Bodenbearbeitung innerhalb eines Bürogebäudes kann ein vorgeplantes Zeitfenster beispielsweise von Büroschluss bis zum nächsten Bürobeginn definiert sein, beispielsweise von 20:00 Uhr abends bis 06:00 Uhr morgens.

Bei sehr großen zu bearbeitenden Flächen kann es vorkommen, dass diese während eines einzigen zur Verfügung stehenden Zeitfensters nicht vollständig gereinigt werden können. Beispielsweise kann es sein, dass die Reinigung einer Fläche bis zum nächsten Bürotag nicht abgeschlossen ist, weil die Fläche zu groß ist, um diese in der zur Verfügung stehenden Zeitspanne vollständig zu bearbeiten. Wenn eine somit unterbrochene Bodenbearbeitungstätigkeit in einem zeitlich darauffolgenden Zeitfenster wieder aufgenommen wird, verhalten sich die Bodenbearbeitungsgeräte nach dem Stand der Technik so, dass diese die Bodenbearbeitungstätigkeit beginnend an dem früheren Startpunkt erneut starten, wobei die Bodenbearbeitung dann wie zuvor von Anfang an erfolgt und die Gesamtfläche bei einer gleichen zur Verfügung stehenden Zeitspanne wiederum nicht vollständig bearbeitet werden kann. Diese Vorgehensweise führt dazu, dass immer wieder nur dieselben Umgebungsteilbereiche einer Umgebung bearbeitet werden, während andere Umgebungsteile stets nicht bearbeitet werden und somit beispielsweise zunehmend verschmutzen können. Ein Verfahren zum Betrieb eines selbsttätig fortbewegenden Bodenbearbeitungsgerätes gemäß dem Oberbegriff des Anspruchs 1 ist schon z.B. aus DE-A-102017109219 bekannt.

### Zusammenfassung der Erfindung

Ausgehend von dem vorgenannten Stand der Technik ist es daher Aufgabe der Erfindung, ein Verfahren zum Betrieb eines sich selbsttätig fortbewegenden Bodenbearbeitungsgerätes zu schaffen, bei welchem auch und insbesondere eine Umgebung mit sehr großen zu bearbeitenden Flächen vollständig bearbeitet werden kann.

Zur Lösung der vorgenannten Aufgabe wird vorgeschlagen, dass der Bearbeitungsplan eine zyklisch aufeinanderfolgende Bodenbearbeitung mehrerer Umgebungsteilbereiche der Umgebung gemäß einer definierten Abfolge der Umgebungsteilbereiche vorgibt, wobei nach Fertigstellung einer Bodenbearbeitungstätigkeit in einem als letzter Umgebungsteilbereich der Abfolge definierten Umgebungsteilbereich eine erneute Bodenbearbeitung der Umgebungsteilbereiche gemäß der gesamten definierten Abfolge beginnend von einem als erster Umgebungsteilbereich der Abfolge definierten Umgebungsteilbereich erfolgt.

Erfindungsgemäß werden mehrere Bodenbearbeitungstätigkeiten im Rahmen eines Bearbeitungsplans definiert, wobei der Bearbeitungsplan eine Reihenfolge der auszuführenden Bodenbearbeitungstätigkeiten festlegt. Diese Ausführung eignet sich insbesondere für Bodenbearbeitungsgeräte, welche mehrere unterschiedliche Bodenbearbeitungstätigkeiten ausführen können. Dies trifft beispielsweise auf Bodenbearbeitungsgeräte zu, welche unterschiedliche Reinigungsaufgaben erfüllen können, beispielsweise eine Wischaufgabe und eine Saugaufgabe, oder Bodenbearbeitungsgeräte, welche verschiedene Werkzeuge zur Bearbeitung zur Verfügung haben, unterschiedliche Bodenbearbeitungsintensitäten anwenden können oder ähnliche. Bei der Fortsetzung einer zuvor pausierten Bodenbearbeitungstätigkeit in einem nächsten Zeitfenster kann es somit auch zu einem unmittelbaren oder späteren Wechsel der Bodenbearbeitungstätigkeit kommen, wobei eine Tätigkeitsreihenfolge des vordefinierten Bearbeitungsplans unabhängig von dem aktuellen Zeitfenster beachtet wird. Wesentlich ist, dass aktuell ein Umgebungsteilbereich zu bearbeiten ist, in welchem eine bestimmte Bodenbearbeitungstätigkeit oder mehrere bestimmte Bodenbearbeitungstätigkeiten auszuführen sind. Die Reihenfolge der auszuführenden Bodenbearbeitungstätigkeiten ist dabei auch an die Reihenfolge der zu bearbeitenden Umgebungsteilbereiche gekoppelt.

Der Bearbeitungsplan gibt eine zyklisch aufeinanderfolgende Bodenbearbeitung mehrerer Umgebungsteilbereiche der Umgebung gemäß einer definierten Abfolge der Umgebungsteilbereiche vor, wobei nach Fertigstellung einer Bodenbearbeitungstätigkeit in einem als letzter Umgebungsteilbereich der Abfolge definierten Umgebungsteilbereich eine erneute Bodenbearbeitung der Umgebungsteilbereiche gemäß der gesamten definierten Abfolge beginnend von einem als erster Umgebungsteilbereich der Abfolge definierten Umgebungsteilbereich erfolgt. Die Bodenbearbeitung für alle Umgebungsteilbereiche der Umgebung wird somit zunächst im Verlauf mehrerer aufeinanderfolgender Zeitfenster bis zu einer vollständigen Bearbeitung aller Umgebungsteilbereiche fortgesetzt. Sobald die Bearbeitung der Gesamtfläche aller Umgebungsteilbereiche abgeschlossen ist, wird ein neuer Bodenbearbeitungszyklus gestartet, welcher eine Wiederholung der zuvor gemäß der definierten Abfolge ausgeführten Bodenbearbeitungstätigkeiten beinhaltet. Da die Größen der Bodenflächen der Umgebungsteilbereiche nicht unbedingt an die zur Verfügung stehenden Zeitfenster angepasst sind, ergibt sich für den darauffolgenden Bodenbearbeitungszyklus ggf. eine anderweitige Aufteilung der Umgebung zu den Zeitfenstern. Aufgrund der veränderten Ausgangssituation zu Beginn des ersten Zeitfensters des neuen Bodenbearbeitungszyklus ergibt sich somit eine Änderung der bereits bearbeiteten bzw. nicht bearbeiteten Teilflächen der Umgebung.

Eine während eines zur Verfügung stehenden Zeitfensters nicht vollständig ausführbare Bodenbearbeitungstätigkeit wird bei Erreichen des Endes der definierten Zeitspanne angehalten und innerhalb eines darauffolgenden Zeitfensters fortgesetzt, nämlich dort, wo die Bodenbearbeitungstätigkeit abgebrochen wurde. Dies beinhaltet, dass die Bodenbearbeitungstätigkeit am Ende des ersten Zeitfensters pausiert wird und in dem zweiten Zeitfenster in dem zuvor bearbeiteten Umgebungsteilbereich der Umgebung fortgesetzt wird. Bevorzugt wird die Bodenbearbeitungstätigkeit an demselben Ort der Umgebung fortgesetzt, an welchem die Bodenbearbeitungstätigkeit zuvor angehalten wurde. Der Startpunkt für die Fortsetzung der Bodenbearbeitungstätigkeit in dem zweiten Zeitfenster hat somit die Koordinaten des Aufenthaltsortes des Bodenbearbeitungsgerätes bei Ablauf des vorausgehenden Zeitfensters. In einer Zwischenzeit zwischen zwei Zeitfenstern hält sich das Bodenbearbeitungsgerät vorzugsweise an einem definierten Ort der Umgebung auf, beispielsweise an einer Basisstation, welche eine Servicetätigkeit an dem Bodenbearbeitungsgerät ausführen kann. Bei einer solchen Basisstation kann es sich beispielsweise um eine Station handeln, die ein Ladegerät zum Aufladen eines Akkumulators des Bodenbearbeitungsgerätes aufweist oder eine andere Servicetätigkeit zur Verfügung stellt. Beispielsweise kann die Basisstation auch eingerichtet sein, das Bodenbearbeitungsgerät zu reinigen, Werkzeuge an das Bodenbearbeitungsgerät zu übergeben, Verbrauchsmaterial an das Bodenbearbeitungsgerät zu übergeben oder Material von dem Bodenbearbeitungsgerät entgegenzunehmen, beispielsweise von dem Bodenbearbeitungsgerät gesammeltes Sauggut. Auch wenn dies nicht bevorzugt ist, kann eine alternative Verfahrensführung vorsehen, dass das Bodenbearbeitungsgerät an demjenigen Ort der Umgebung wartet, an welchem die Bodenbearbeitungstätigkeit bei Ablauf des Zeitfensters angehalten wurde. Sobald das nächste Zeitfenster erreicht ist, kann die Bodenbearbeitungstätigkeit dann an diesem Ort fortgesetzt werden, ohne dass sich das Bodenbearbeitungsgerät zunächst in denjenigen Umgebungsteilbereich begeben muss, in welchem die Bodenbearbeitungstätigkeit fortzusetzen ist. Darüber hinaus könnte eine Steuereinrichtung des Bodenbearbeitungsgerätes bei Ende eines Zeitfensters auch zunächst prüfen, ob der aktuelle Standort des Bodenbearbeitungsgerätes als Warteort geeignet ist, so dass sich das Bodenbearbeitungsgerät ggf. nicht von diesem Ort fortbewegen muss, um auf den Startzeitpunkt eines nächsten Zeitfensters zu warten. Das Bodenbearbeitungsgerät kann somit genau an dem Standort, an welchem die Bodenbearbeitungstätigkeit angehalten wurde, auf die Fortsetzung der Bodenbearbeitungstätigkeit in einem nächstfolgenden Zeitfenster warten. Sobald die Bodenbearbeitungstätigkeit als Ganzes erledigt ist bzw. alle vorgeplanten Bodenbearbeitungstätigkeiten erledigt sind, kann das Bodenbearbeitungsgerät an eine Basisstation oder einen vordefinierten Warteort zurückkehren. Der Bodenbearbeitungsvorgang kann dann neu gestartet werden, insbesondere unter Beachtung einer definierten Mindestzeitspanne, die vergangen sein muss, nachdem die Umgebung zuletzt bearbeitet wurde. Dadurch wird vorzugsweise verhindert, dass ein Umgebungsteilbereich zu häufig bearbeitet wird und das Bodenbearbeitungsgerät somit unnötig betrieben wird. Dies hilft, insbesondere Energie zu sparen sowie die Lebensdauer des Bodenbearbeitungsgerätes zu verlängern. Alternativ kann auch vorgesehen sein, dass das Bodenbearbeitungsgerät nach Fertigstellung der Bodenbearbeitungstätigkeit während eines noch nicht abgelaufenen Zeitfensters die Bodenbearbeitungstätigkeit nahtlos fortsetzt, nämlich vorzugsweise in einem Umgebungsteilbereich der Umgebung, dessen Bearbeitung am weitesten zurückliegt.

Des Weiteren wird vorgeschlagen, dass die Umgebung in eine Mehrzahl von definierten Umgebungsteilbereichen eingeteilt wird, wobei die Bodenbearbeitungstätigkeit zur Ausführung in zumindest einem bestimmten der definierten Umgebungsteilbereiche geplant wird. Gemäß dieser Ausgestaltung wird vorzugsweise auch eine Reihenfolge für zu bearbeitende Umgebungsteilbereiche der Umgebung festgesetzt, so dass das Bodenbearbeitungsgerät sich vorzugsweise besonders zeitsparend und effizient innerhalb der Umgebung fortbewegt. Dabei werden bevorzugt benachbarte Umgebungsteilbereiche zeitlich aufeinanderfolgend bearbeitet, so dass das Bodenbearbeitungsgerät zwischen den aufeinanderfolgend bearbeiteten Umgebungsteilbereichen keine gro-ßen Strecken überwinden muss. Die Umgebungsteilbereiche können beispielsweise Räume oder Teile eines Raumes sein. Alternativ können die Umgebungsteilbereiche jedoch unabhängig von Raumgrenzen definiert sein. Das Bodenbearbeitungsgerät bewegt sich in aufeinanderfolgenden Zeitfenstern vorzugsweise entlang einer vordefinierten Route durch die Mehrzahl von definierten Umgebungsteilbereichen. Dabei kann ein Nutzer des Bodenbearbeitungsgerätes insbesondere einen Startpunkt der Fortbewegungsroute definieren. Dadurch ist die auszuführende Bodenbearbeitungstätigkeit zunächst in demjenigen Umgebungsteilbereich vorgeplant, welcher den Startpunkt beinhaltet. Je nach der Länge der Zeitspanne der zeitlich darauffolgenden Zeitfenster werden dann weitere Umgebungsteilbereiche der Umgebung bearbeitet, welche auf der Route als nächstes definiert sind.

Es wird vorgeschlagen, dass das Bodenbearbeitungsgerät eine während der Ausführung in einem Umgebungsteilbereich angehaltene Bodenbearbeitungstätigkeit zu einem vordefinierten späteren Startzeitpunkt in demselben Umgebungsteilbereich fortsetzt. Wie zuvor erläutert ist der vordefinierte spätere Startzeitpunkt gleichbedeutend mit dem Beginn eines neuen Zeitfensters, in welchem die Fortführung der Bodenbearbeitungstätigkeit möglich ist. Es kann vorgesehen sein, die Bodenbearbeitungstätigkeit an exakt denjenigen Koordinaten des Umgebungsteilbereiches fortzusetzen, an welchem das Bodenbearbeitungsgerät zuvor seine Bodenbearbeitungstätigkeit abgebrochen hat, oder an einem anderen Ort desselben Umgebungsteilbereiches.

Des Weiteren kann vorgesehen sein, dass ein Umgebungsteilbereich der Umgebung, in welchem eine Bodenbearbeitungstätigkeit bereits vollständig ausgeführt wurde, als ein No-Go-Bereich definiert wird, welcher von dem Bodenbearbeitungsgerät nicht noch einmal bearbeitet werden darf, solange nicht alle Umgebungsteilbereiche der Umgebung vollständig bearbeitet wurden. Gemäß dieser Ausgestaltung wird die Bodenbearbeitungstätigkeit bei einer Überschreitung eines für die vollständige Bodenbearbeitung zur Verfügung stehenden Zeitfensters durch die für die Bodenbearbeitungstätigkeit benötigte Zeitspanne vollständig beendet und werden die bis zur Beendigung der Bodenbearbeitungstätigkeit bereits bearbeiteten Umgebungsteilbereiche als No-Go-Bereiche vermerkt. Beispielsweise können No-Go-Bereiche in einer dem Bodenbearbeitungsgerät zur Verfügung stehenden Umgebungskarte gespeichert werden, oder alternativ in einer separaten Datei, auf welche eine Steuereinrichtung des Bodenbearbeitungsgerätes zugreifen kann. Die No-Go-Bereiche beschreiben diejenigen Anteile einer Gesamtfläche der Umgebung, welche im Folgenden nicht bearbeitet werden sollen, da dort bereits eine Bodenbearbeitungstätigkeit abgeschlossen wurde. Das Bodenbearbeitungsgerät bearbeitet in späteren Zeitfenstern dann nur noch diejenigen Bereiche, welche außerhalb der definierten No-Go-Bereiche bzw. des definierten No-Go-Bereiches liegen. Wenn nach Ablauf mehrerer definierter Zeitfenster eine vollständige Bodenbearbeitung der Umgebung erfolgt ist, werden die zuvor gespeicherten No-Go-Bereiche wieder gelöscht. Sodann kann ein neuer Bodenbearbeitungsvorgang gestartet werden, wobei während des ersten Zeitfensters des neuen Bodenbearbeitungsvorgangs noch keine No-Go-Bereiche zu berücksichtigen sind, da diese nach Abschluss der zuvor beendeten vollständigen Reinigung gelöscht wurden. Alternativ zu der Definition von No-Go-Bereichen für bereits bearbeitete Umgebungsteilbereiche kann alternativ auch eine Definition von Bearbeitungsbereichen erfolgen. Diese definierten Bearbeitungsbereiche definieren bisher noch nicht bearbeitete Umgebungsteilbereiche der Umgebung, welche in späteren Zeitfenstern noch zu bearbeiten sind. Nach Schließen eines ersten Zeitfensters werden diejenigen Umgebungsteilbereiche als Bearbeitungsbereiche definiert, welche noch zu bearbeiten sind. Von Zeitfenster zu Zeitfenster reduziert sich somit der Betrag der noch vorhandenen Bearbeitungsflächen. Diese Verfahrensweise wird solange fortgeführt, bis die Bearbeitung der Gesamtfläche der Umgebung abgeschlossen ist. Wenn die Bodenbearbeitung vollständig und erfolgreich beendet ist, jedoch noch Restzeit eines aktuell laufenden Zeitfensters für die Durchführung einer Bodenbearbeitung zur Verfügung steht, kann unmittelbar ein neuer Bodenbearbeitungszyklus ausgehend von einem initialen Umgebungsteilbereich gestartet werden. Dieser initiale Umgebungsteilbereich ist vorzugsweise derjenige Umgebungsteilbereich, welcher am längsten nicht bearbeitet wurde, d.h. dessen Bodenbearbeitung länger zurückliegt als die Bodenbearbeitung in anderen Umgebungsteilbereichen.

Es wird vorgeschlagen, dass der definierte No-Go-Bereich bzw. der definierte Bearbeitungsbereich gelöscht wird, wenn das Bodenbearbeitungsgerät alle Umgebungsteilbereiche der Umgebung vollständig bearbeitet hat. Sodann kann wie zuvor beschrieben ein neuer Bodenbearbeitungszyklus gestartet werden, welcher eine erneute Bodenbearbeitung der definierten Umgebungsteilbereiche vorsieht.

In diesem Zusammenhang ist es insbesondere vorteilhaft, dass der No-Go-Bereich (bzw. der Bearbeitungsbereich) erst gelöscht wird, wenn die Zeitspanne desjenigen Zeitfensters abgelaufen ist, in welchen ein Zeitpunkt fällt, zu welchem alle Umgebungsteilbereiche der Umgebung vollständig bearbeitet sind. Durch diese Ausgestaltung kann erreicht werden, dass zwischen zwei Zyklen von Bodenbearbeitungstätigkeiten ein gewisser zeitlicher Abstand besteht, so dass die Umgebungsteilbereiche nicht ohne Pause aufeinanderfolgend bearbeitet werden. Somit kann verhindert bzw. zumindest verzögert werden, dass die Umgebungsteilbereiche zu häufig hintereinander bearbeitet werden und es somit zu einem unnötigen Energieaufwand bzw. Verschleiß des Bodenbearbeitungsgerätes kommt. Insbesondere kann es bei zeitlich sehr großen Zeitspannen, die für eine oder mehrere Bodenbearbeitungstätigkeiten zur Verfügung stehen, dazu kommen, dass die gesamte Umgebung ohne Pause zwei oder noch mehrere Male hintereinander bearbeitet wird. Daher wird vorgeschlagen, dass die No-Go-Bereiche, die das Ergebnis einer letzten Bodenbearbeitungstätigkeit eines Zyklus sind, gespeichert werden und bei einem Neustart eines neuen Zyklus berücksichtigt werden. Damit wird erreicht, dass im Fall eines automatischen Neustarts der Bodenbearbeitung der Gesamtfläche die zuvor bereits bearbeiteten Umgebungsteilbereiche berücksichtigt werden. Dadurch kann verhindert werden, dass die Umgebung mehrfach hintereinander bearbeitet wird. In diesem Zusammenhang empfiehlt es sich, dass ein zeitlicher Mindestabstand definiert wird, der einen einzuhaltenden Abstand zwischen dem Abschluss einer vollständigen Bearbeitung der Umgebung und dem Neustart eines neuen Bearbeitungsvorgangs in derselben Umgebung definiert. Nach Ablauf dieses zeitlichen Mindestabstands ist dann ein Neustart eines Zyklus mit einer oder mehreren Bodenbearbeitungstätigkeiten möglich. Dies erfolgt durch eine Löschung der No-Go-Bereiche bzw. Bearbeitungsbereiche nach Ablauf des definierten zeitlichen Mindestabstands.

Des Weiteren kann es vorgesehen sein, dass bestimmte Umgebungsteilbereiche der Umgebung häufiger bearbeitet werden sollen als andere Umgebungsteilbereiche. Dafür kann beispielsweise im Rahmen eines mehrere Bodenbearbeitungstätigkeiten beinhaltenden Bearbeitungsplanes eine mehrfache Bearbeitung des bestimmten Umgebungsteilbereiches in Zeitabständen definiert sein. Somit können beispielsweise Teilflächen priorisiert werden, die täglich bearbeitet werden müssen, beispielsweise Umgebungsteilbereiche eines Raumes oder eines Gebäudes, die häufig verschmutzen und somit öfter zu reinigen sind als andere Teilflächen der Umgebung.

Neben dem zuvor beschriebenen Verfahren wird mit der Erfindung des Weiteren ein sich selbsttätig fortbewegendes Bodenbearbeitungsgerät mit einer Steuereinrichtung vorgeschlagen, welche eingerichtet ist, ein zuvor beschriebenes Verfahren auszuführen. Insbesondere kann das Bodenbearbeitungsgerät ein Reinigungsgerät sein, welches eingerichtet ist, eine Bodenfläche zu reinigen. Die zuvor in Bezug auf das erfindungsgemäße Verfahren beschriebenen Merkmale und Vorteile ergeben sich entsprechend auch für das Bodenbearbeitungsgerät. Zur Vermeidung von Wiederholungen wird somit auf den vorhergehenden Vortrag zu dem erfindungsgemäßen Verfahren verwiesen.

### Kurze Beschreibung der Zeichnungen

Im Folgenden wird die Erfindung anhand von Ausführungsbeispielen näher erläutert. Es zeigen:
- Fig. 1: ein Bodenbearbeitungsgerät mit einer Basisstation,
- Fig. 2: ein Flussdiagramm eines erfindungsgemäßen Verfahrens gemäß einer ersten Ausführungsform,
- Fig. 3a-f: Bearbeitungszustände mehrerer Umgebungsteilbereiche einer Umgebung zu verschiedenen Zeitpunkten,
- Fig. 4: ein Flussdiagramm eines erfindungsgemäßen Verfahrens gemäß einer weiteren Ausführungsform,
- Fig. 5a-f: Bearbeitungszustände mehrerer Umgebungsteilbereiche einer Umgebung zu verschiedenen Zeitpunkten mit Verweis auf Fig. 4,
- Fig. 6: ein Flussdiagramm eines erfindungsgemäßen Verfahrens gemäß einer weiteren Ausführungsform.

### Beschreibung der Ausführungsformen

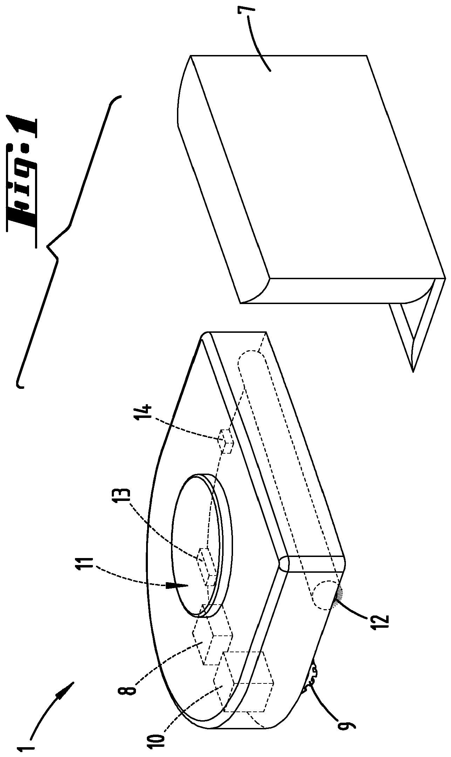

Fig. 1 zeigt zunächst exemplarisch ein Bodenbearbeitungsgerät 1 sowie eine Basisstation 7, welche eingerichtet ist, eine Servicetätigkeit an dem Bodenbearbeitungsgerät 1 auszuführen, beispielsweise einen Akkumulator (nicht dargestellt) des Bodenbearbeitungsgerätes 1 aufzuladen, Werkzeuge an dieses zu übergeben, das Bodenbearbeitungsgerät 1 zu reinigen oder Ähnliches. Die Basisstation 7 stellt darüber hinaus einen Ausgangsstandort für das Bodenbearbeitungsgerät 1 dar, von welchem aus das Bodenbearbeitungsgerät 1 seine Fortbewegungsrouten startet.

Das beispielhaft dargestellte Bodenbearbeitungsgerät 1 weist eine Detektionseinrichtung 11 auf, mit welcher Umgebungsdaten in der Umgebung des Bodenbearbeitungsgerätes 1 detektiert werden können. Bei den Umgebungsdaten kann es sich beispielsweise um Daten von in der Umgebung befindlichen Objekten handeln, beispielsweise von Wänden, Möbelstücken oder Ähnlichem. Die Detektionseinrichtung 11 kann beispielsweise eine optische Abstandsmesseinrichtung aufweisen, z.B. eine Triangulationsmesseinrichtung, welche Abstände zu Objekten innerhalb der Umgebung messen kann. Die Detektionseinrichtung 11 weist beispielsweise eine Laserdiode auf, deren emittierter Lichtstrahl über eine Umlenkeinrichtung aus einem Gehäuse des Bodenbearbeitungsgerätes 1 herausgeführt und um eine in der gezeigten Orientierung des Bodenbearbeitungsgerätes 1 senkrecht stehende Achse rotierbar ist, insbesondere in einem Winkelbereich von 360 Grad. Dadurch ist eine Rundum-Abstandsmessung um das Bodenbearbeitungsgerät 1 möglich. Mit Hilfe der Detektionseinrichtung 11 kann die Umgebung in einer bevorzugt horizontalen Ebene vermessen werden, d.h. in einer zu einer zu bearbeitenden Bodenfläche parallelen Ebene. Dadurch kann das Bodenbearbeitungsgerät 1 unter Vermeidung einer Kollision mit Hindernissen in der Umgebung verfahren. Die mittels der Detektionseinrichtung 11 aufgenommenen Umgebungsdaten werden von einer Steuereinrichtung 8 des Bodenbearbeitungsgerätes 1 vorzugsweise zu einer Umgebungskarte verarbeitet, die die Steuereinrichtung 8 wiederum nutzen kann, um das Bodenbearbeitungsgerät 1 unter Vermeidung von Hindernissen zu navigieren. Neben der Detektionseinrichtung 11 kann das Bodenbearbeitungsgerät 1 auch noch weitere Sensoren aufweisen, beispielsweise einen nicht dargestellten Odometriesensor, welcher eine von dem Bodenbearbeitungsgerät 1 zurückgelegte Wegstrecke misst. Des Weiteren kann das Bodenbearbeitungsgerät 1 beispielsweise auch einen Kontaktsensor, Ultraschallsensor, Radarsensor oder Ähnliches aufweisen. Das Bodenbearbeitungsgerät 1 verfügt des Weiteren über einen lokalen Speicher 13, welcher beispielsweise zur Speicherung der erstellten Umgebungskarte dient. Des Weiteren weist das Bodenbearbeitungsgerät 1 hier eine Kommunikationsschnittstelle 14 auf, über welche das Bodenbearbeitungsgerät 1 mit externen Endgeräten eines Nutzers des Bodenbearbeitungsgerätes 1 kommunizieren kann. Bei einem solchen externen Endgerät kann es sich beispielsweise um ein mobiles Gerät des Nutzers, insbesondere ein Mobiltelefon, einen Tablet-Computer oder Ähnliches handeln. Auf dem externen Endgerät ist vorzugsweise eine Applikation installiert, über welche der Nutzer Informationen über das Bodenbearbeitungsgerät 1 angezeigt bekommen kann sowie Eingaben zum Betrieb des Bodenbearbeitungsgerätes 1 tätigen kann. Insbesondere kann die installierte Applikation auch eine Kalenderanwendung aufweisen, in welche eine oder mehrere vorgeplante Bodenbearbeitungstätigkeiten eingetragen sind, die das Bodenbearbeitungsgerät 1 zu einem definierten Zeitpunkt auszuführen hat. Bei der Kommunikationsschnittstelle 14 kann es sich beispielsweise um eine WLAN-Schnittstelle handeln. Das Bodenbearbeitungsgerät 1 ist darüber hinaus fähig, sich selbsttätig innerhalb der Umgebung fortzubewegen. Dazu verfügt das Bodenbearbeitungsgerät 1 über motorisch angetriebene Räder 9. Zudem kann das Bodenbearbeitungsgerät 1 ein oder mehrere Bodenbearbeitungselemente 12 aufweisen, welche der Durchführung einer oder mehrerer Bodenbearbeitungstätigkeiten in der Umgebung dienen. Hier ist das Bodenbearbeitungsgerät 1 beispielsweise als ein Reinigungsroboter ausgebildet. Das Bodenbearbeitungselement 12 kann entsprechend beispielsweise ein Reinigungselement sein, insbesondere eine rotierende Reinigungsbürste, alternativ ein Wischtuch, eine Wischwalze oder Ähnliches. Die Bodenbearbeitungselemente 12 dienen der Einwirkung auf eine zu bearbeitende Bodenfläche. Das hier als Saugroboter ausgebildete Bodenbearbeitungsgerät 1 kann darüber hinaus z.B. in üblicher Art und Weise eine nicht weiter dargestellte Saugmundöffnung aufweisen, über welche Sauggut mittels eines Gebläses in eine Sauggutkammer des Bodenbearbeitungsgerätes 1 eingesaugt werden kann. Ein alternativ als Wischroboter ausgebildetes Bodenbearbeitungsgerät 1 könnte beispielsweise eine Flüssigkeitsauftragseinrichtung, einen Flüssigkeitstank und Ähnliches aufweisen. Für die Elektroversorgung der einzelnen elektrischen Verbraucher des Bodenbearbeitungsgerätes 1, beispielsweise für eine Antriebseinrichtung 10 zum Antrieb der Räder 9 und eine Antriebseinrichtung 10 zum Antrieb des Bodenbearbeitungselementes 12, weist das Bodenbearbeitungsgerät 1 vorzugsweise einen nicht dargestellten, wiederaufladbaren Akkumulator auf, welcher mittels der Basisstation 7 aufgeladen werden kann.

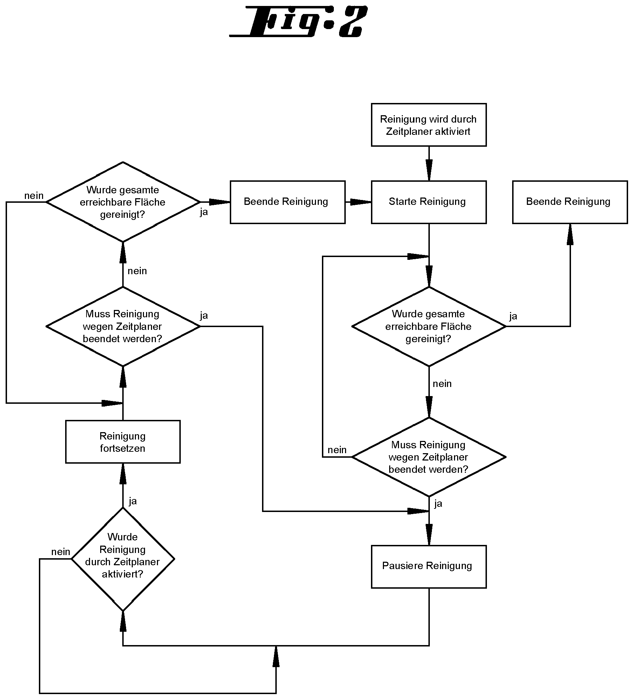

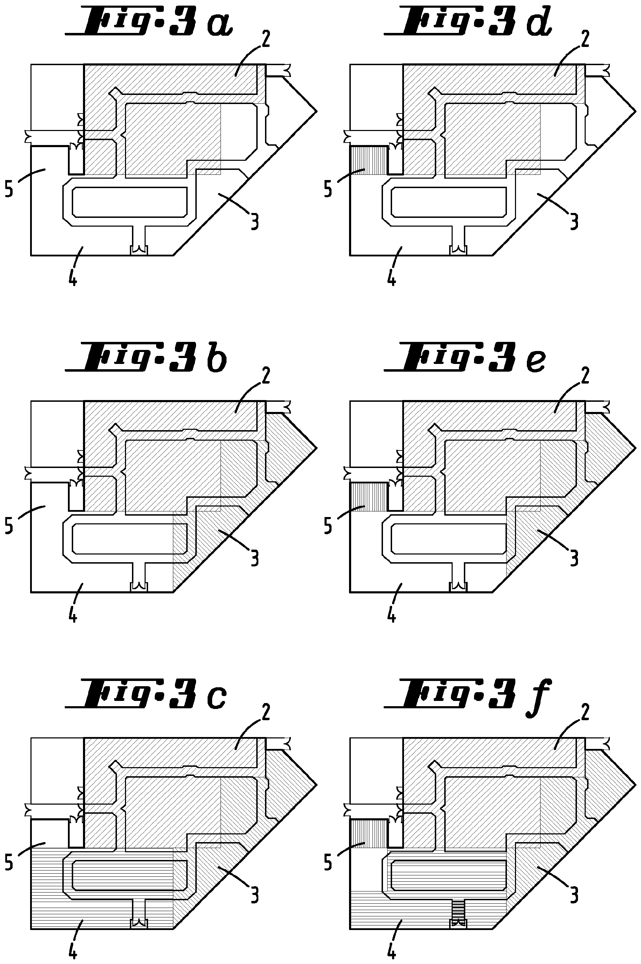

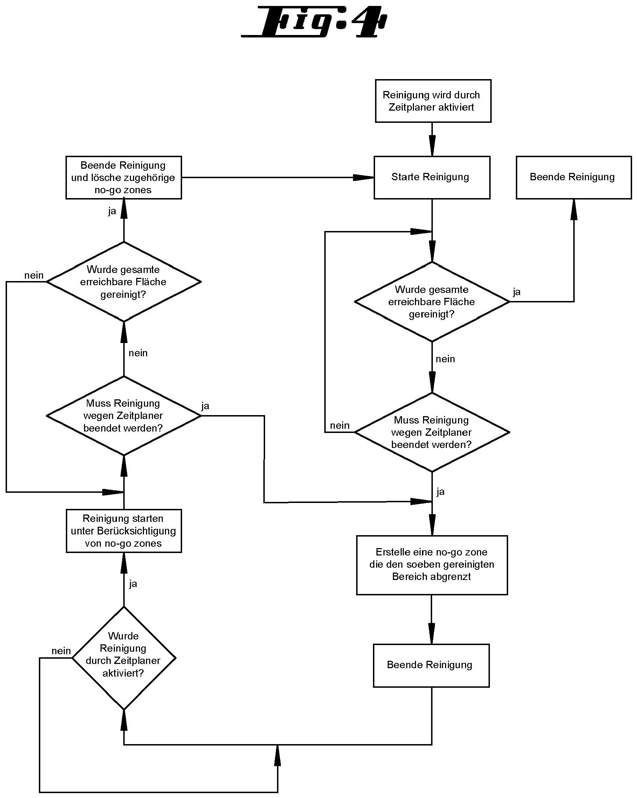

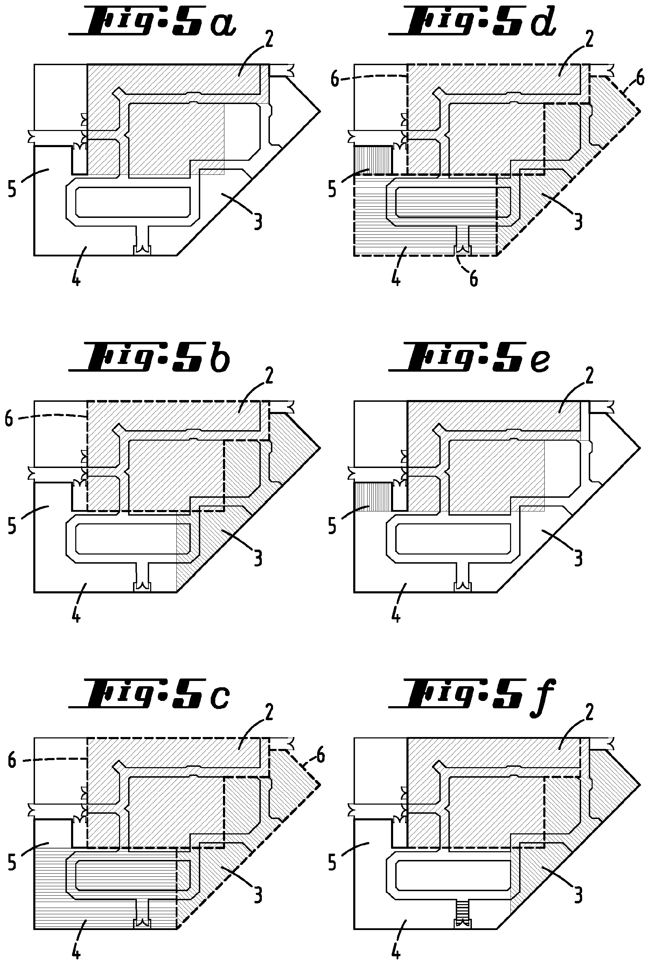

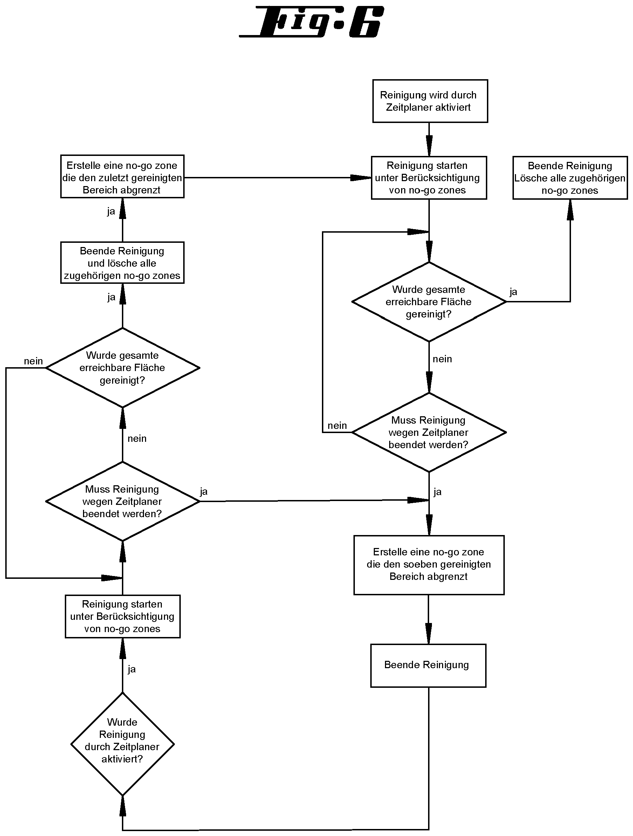

Im Folgenden wird anhand der Figuren 2 bis 6 näher erläutert, wie die Steuereinrichtung 8 des Bodenbearbeitungsgerätes 1 einen Betrieb des Bodenbearbeitungsgerätes 1 so steuern kann, dass auch eine Umgebung mit sehr gro-ßen zu bearbeitenden Bodenflächen vollständig und optimal bearbeitet werden kann, ohne dass der Nutzer dies in einem aufwändigen Programmierunterfangen selbst machen muss. Dabei stellen die Figuren 2 und 3a bis 3f eine erste mögliche Ausführungsform dar, die Figuren 4 und 5a bis 5f eine zweite mögliche Ausführungsform, und die Fig. 6 eine weitere mögliche Ausführungsform, wobei darüber hinaus auch noch andere Ausführungsformen im Rahmen der Erfindung liegen. Insbesondere ist es auch möglich, dass Unterkombinationen der vorgeschlagenen Vorgehensweisen ausgeführt werden können.

Ausgangssituation für jede der im Folgenden dargestellten Ausführungsformen ist, dass für die Bodenbearbeitung mehrerer Umgebungsteilbereiche 2, 3, 4, 5 der Umgebung vordefinierte Zeitfenster zur Verfügung stehen, in welchen das Bodenbearbeitungsgerät 1 eine Bodenbearbeitungstätigkeit ausführen darf. Beispielsweise kann es sich bei der Umgebung um eine Büroumgebung handeln, in welcher von 06:00 Uhr morgens bis 20:00 Uhr abends Personen anwesend sind, so dass als Zeitfenster für die Bodenbearbeitung wochentags nur der Zeitraum von 20:00 Uhr abends bis 06:00 Uhr morgens zur Verfügung steht, sowie die Samstage und Sonntage ganztägig. Da die Bodenbearbeitung aller Umgebungsteilbereiche 2, 3, 4, 5 nicht vollständig innerhalb eines einzigen Zeitfensters von 20:00 Uhr bis 06:00 Uhr abgeschlossen werden kann, muss diese unterbrochen werden. Die für eine Bodenbearbeitung zur Verfügung stehenden Zeitfenster sind vorzugsweise in dem lokalen Speicher 13 des Bodenbearbeitungsgerätes 1 hinterlegt, so dass die Steuereinrichtung 8 des Bodenbearbeitungsgerätes 1 Kenntnis darüber hat, wann das Bodenbearbeitungsgerät 1 in der Umgebung betrieben werden darf, d.h. in der Umgebung umherfahren und dort Bodenbearbeitungstätigkeiten ausführen kann. Grundsätzlich kann ein abzuarbeitender Bearbeitungsplan nur eine einzige Bodenbearbeitungstätigkeit oder unterschiedliche Bodenbearbeitungstätigkeiten beinhalten. Letzteres kann beispielsweise der Fall sein, wenn das Bodenbearbeitungsgerät 1 ein kombiniertes Saug- und Wischgerät ist, welches nacheinander erst eine Saugtätigkeit und anschließend eine Wischtätigkeit ausführt. Die Steuereinrichtung 8 steuert das Bodenbearbeitungsgerät 1 anhand des Bearbeitungsplans, wobei das Bodenbearbeitungsgerät 1 seine Fortbewegungsroute ausgehend von dem Standort der Basisstation 7 startet. In dem Bearbeitungsplan und/oder dem Speicher 13 sind Zeitfenster notiert, in welchen eine Bodenbearbeitung innerhalb der Umgebungsteilbereiche 2 bis 5 der Umgebung erfolgen kann. Hier weist der kalendarische Bearbeitungsplan beispielsweise für die Wochentage Montag bis Freitag aufeinanderfolgende Zeitfenster von jeweils 20:00 Uhr abends bis 06:00 Uhr morgens auf, sowie an den Samstagen und Sonntagen ganztägige Zeitfenster, d.h. von 00:00 Uhr Mitternacht bis 00:00 Uhr Mitternacht, wobei sich dann an den Schnittstellen zu den vorausgegangenen Freitagen bzw. Montagen jeweils ein verlängerter Zeitbereich ergibt. Die Zeitfenster sind durch einen definierten Startzeitpunkt, beispielsweise 20:00 Uhr abends, und eine definierte Zeitspanne, hier beispielsweise zehn Stunden, gekennzeichnet. Zeitfenster zur Ausführung einer Bodenbearbeitungstätigkeit existieren somit bei einem Übergang von Montag auf Dienstag, einem Übergang von Dienstag auf Mittwoch, einem Übergang von Mittwoch auf Donnerstag usw.

Die in den Figuren 2 und 3 dargestellte Ausführungsform funktioniert nun so, dass die Steuereinrichtung 8 auf einen Bearbeitungsplan zugreift und daraus einen Startzeitpunkt für eine vorgeplante Bodenbearbeitungstätigkeit entnimmt. Sobald der Startzeitpunkt des nächsten zur Bodenbearbeitung zur Verfügung stehenden Zeitfensters erreicht ist, steuert die Steuereinrichtung 8 das Bodenbearbeitungsgerät 1 zur Ausführung einer geplanten Bodenbearbeitungstätigkeit, hier beispielsweise der Reinigung einer Bodenfläche in einem ersten Umgebungsteilbereich 2 der Umgebung. Wie in dem Flussdiagramm gemäß Fig. 2 dargestellt wird nun permanent überprüft, ob bereits alle Umgebungsteilbereiche 2, 3, 4, 5 der Umgebung gereinigt wurden. Sofern dies bereits während des ersten definierten Zeitfensters der Fall ist, wird die Reinigung beendet. Sofern die Reinigung aller Umgebungsteilbereiche 2 bis 5 innerhalb des ersten zur Verfügung stehenden Zeitfensters jedoch nicht abgeschlossen werden kann, wird die Reinigung zunächst pausiert. Die Steuereinrichtung 8 steuert das Bodenbearbeitungsgerät 1 daraufhin vorzugsweise zu der Basisstation 7, wo beispielsweise der Akkumulator des Bodenbearbeitungsgerätes 1 wieder aufgeladen werden kann und das Bodenbearbeitungsgerät 1 zudem an einem Ort ruhen kann, wo es in den Umgebungsteilbereichen 2 bis 5 anwesende Personen nicht stört. Die Steuereinrichtung 8 entnimmt dem Speicher 13 des Bodenbearbeitungsgerätes 1 anschließend den Startzeitpunkt des nächsten geplanten Zeitfensters und startet die Weiterführung der zuvor pausierten Reinigungstätigkeit, sobald das neue Zeitfenster für die Aktivität des Bodenbearbeitungsgerätes 1 zur Verfügung steht. Die Reinigung der Umgebungsteilbereiche 2 bis 5 wird nun solange fortgesetzt, bis alle Umgebungsteilbereiche 2 bis 5 gereinigt sind. Sofern auch das nächste zur Verfügung stehende Zeitfenster bzw. dessen Zeitspanne nicht ausreicht, um alle Umgebungsteilbereiche 2 bis 5 komplett zu reinigen, wird der Reinigungsvorgang erneut pausiert, bis ein nächstes Zeitfenster zur Verfügung steht. Sobald die gesamte Fläche aller zu reinigenden Umgebungsteilbereiche 2 bis 5 schließlich vollständig bearbeitet ist, wird der Reinigungsauftrag beendet. Die Steuereinrichtung 8 steuert das Bodenbearbeitungsgerät 1 anschließend vorzugsweise wieder zu der Basisstation 7, wo das Bodenbearbeitungsgerät 1 dann auf einen nächsten Reinigungsauftrag wartet.

Die Figuren 3a bis 3f stellen die im Verlauf der Abarbeitung des Reinigungsplans bearbeiteten Umgebungsteilbereiche 2 bis 5 dar. Die Fig. 3a zeigt dabei den Bearbeitungsstatus der Umgebungsteilbereiche 2 bis 5 nach Beendigung des ersten Zeitfensters. Die Fig. 3b zeigt den Bearbeitungsstatus der Umgebungsteilbereiche 2 bis 5 nach einem zweiten Zeitfenster, die Fig. 3c den Status entsprechend nach einem dritten Zeitfenster usw. Wie zu erkennen, ist nach Abschluss des ersten Zeitfensters ein erster Umgebungsteilbereich 2 gereinigt, nach Abschluss des zweiten Zeitfensters zusätzlich ein zweiter Umgebungsteilbereich 3, nach Abschluss des dritten Zeitfensters zusätzlich ein dritter Umgebungsteilbereich 4 und nach Abschluss eines vierten Zeitfensters (Fig. 3d) zusätzlich ein vierter Umgebungsteilbereich 5 plus ein Anteil des zuvor bereits gereinigten ersten Umgebungsteilbereiches 2. Erkennbar ist somit die zyklische Reinigung der Umgebungsteilbereiche 2 bis 5, bei welcher nach erfolgreicher Bearbeitung aller Umgebungsteilbereiche 2 bis 5 der gesamte Reinigungsablauf von vorne beginnt.

Da die Zeitspannen der vordefinierten Zeitfenster in der Praxis nicht so bemessen sind, dass diese stets für eine komplette Reinigung eines bestimmten Raumes ausreichen, verändern sich die in darauffolgenden Zeitfenstern gereinigten Umgebungsteilbereiche 2 bis 5 in Relation zu den während eines ersten Durchgangs gereinigten Umgebungsteilbereichen 2 bis 5. Anhand des Übergangs zwischen den Situationen gemäß Fig. 3c und Fig. 3d ist beispielsweise zu erkennen, dass die Gesamtfläche aller Umgebungsteilbereiche 2 bis 5 zu einem bestimmten Zeitpunkt erstmalig vollständig gereinigt ist. Direkt im Anschluss (Fig. 3d) wird dann ein nächster Reinigungsvorgang gestartet und die Reinigung der Umgebungsteilbereiche 2 bis 5 wiederholt sich. Allerdings kommt es aufgrund der veränderten Ausgangssituation zu einer Neudefinition der bereits gereinigten Umgebungsteilbereiche 2 bis 5. Das Starten des nächsten Reinigungsvorgangs kann manuell durch einen Nutzer erfolgen oder für einen festen Startzeitpunkt vordefiniert sein, insbesondere mittels einer Kalender-App, auf welche die Steuereinrichtung 8 des Bodenbearbeitungsgerätes 1 zugreifen kann.

Die Figuren 4 und 5a bis 5f zeigen eine weitere Ausführungsform eines erfindungsgemäßen Verfahrens. Diese Ausführungsform ähnelt dem Vorgehen gemäß den Figuren 2 und 3, wobei hier der Unterschied darin besteht, dass bei Ablauf eines Zeitfensters anstelle des Pausierens der Abarbeitung eines Reinigungsplans eine endgültige Beendigung der Bodenbearbeitungstätigkeit und Speicherung der soeben gereinigten Umgebungsteilbereiche 2 bis 5 erfolgt. Insbesondere werden diejenigen Umgebungsteilbereiche 2 bis 5, welche zum Ende des Zeitfensters bereits gereinigt wurden, als No-Go-Bereiche 6 gespeichert. Somit kann die Steuereinrichtung 8 des Bodenbearbeitungsgerätes 1 zu Beginn eines neuen Zeitfensters anhand der in dem Speicher 13 gespeicherten No-Go-Bereiche 6 prüfen, welche Umgebungsteilbereiche 2 bis 5 der Umgebung bereits gereinigt wurden und somit von einer weiteren Reinigungstätigkeit auszuschließen sind. In dem Flussdiagramm gemäß Fig. 4 ist zu erkennen, dass in dem Fall, dass die Reinigung wegen des Ablaufs einer Zeitspanne eines Zeitfensters beendet werden muss, ein No-Go-Bereich 6 (no-go Zone) erstellt wird, der den bzw. die bereits gereinigten Umgebungsteilbereiche 2 bis 5 von den noch nicht gereinigten Umgebungsteilbereichen 2 bis 5 abgrenzt. Bei einer darauffolgenden erneuten Reinigung der Umgebung nach Erreichen des Startzeitpunktes eines darauffolgenden Zeitfensters wird zunächst abgefragt, welche Umgebungsteilbereiche 2 bis 5 Teil eines solchen No-Go-Bereiches 6 sind. Daraufhin wird ein neuer Reinigungsvorgang unter Berücksichtigung des No-Go-Bereiches 6 gestartet. Wenn die gesamten zur Reinigung vorgesehenen Umgebungsteilbereiche 2 bis 5 vollständig gereinigt wurden, wird der Reinigungsvorgang beendet und es werden die zuvor definierten No-Go-Bereiche 6 aus dem Speicher 13 gelöscht. Anschließend kann ein neuer Reinigungsvorgang gestartet werden. Die Figuren 5a bis 5f zeigen die Vergrößerung der jeweils definierten No-Go-Bereiche 6 nach Abschluss jedes durchlaufenen Zeitfensters.

Die Fig. 6 zeigt schließlich eine weitere Modifikation eines erfindungsgemäßen Vorgehens, welche verhindert, dass es nach einer vollständigen Reinigung aller Umgebungsteilbereiche 2 bis 5 sofort wieder zu einem Starten eines neuen Reinigungszyklus kommt. Diese Ausführung eignet sich insbesondere bei sehr großen zur Verfügung stehenden Zeitfenstern, welche eine Zeitspanne definieren, die ausreichend ist, um alle Umgebungsteilbereiche 2 bis 5 der Umgebung mehr als einmal vollständig zu reinigen. Dadurch soll verhindert werden, dass das Bodenbearbeitungsgerät 1 tätig wird, obwohl die Umgebungsteilbereiche 2 bis 5 erst kürzlich gereinigt wurden und somit davon auszugehen ist, dass das Bodenbearbeitungsgerät 1 keine relevante Menge von Schmutz beseitigen kann. Diese Ausführungsform spart somit Energie und verhindert zudem auch eine Verkürzung der Lebensdauer des Bodenbearbeitungsgerätes 1. Wie in dem Flussdiagramm gemäß Fig. 6 dargestellt ähnelt diese Vorgehensweise der Ausführungsform gemäß den Figuren 4 und 5a bis 5f, bei welcher No-Go-Bereiche 6 definiert wurden. Gemäß der nun modifizierten Vorgehensweise werden nach Beenden einer vollständigen Reinigung aller Umgebungsteilbereiche 2 bis 5 der Umgebung zunächst die zugehörigen zuvor definierten No-Go-Bereiche 6 gelöscht und anschließend ein neuer No-Go-Bereich 6 definiert, der den zuletzt gereinigten kompletten Flächenbereich aller Umgebungsteilbereiche 2 bis 5 umfasst. Wenn nun anschließend ein neuer Reinigungsvorgang gestartet wird, entweder manuell durch einen Nutzer oder vordefiniert durch einen Reinigungsplan, prüft die Steuereinrichtung 8 des Bodenbearbeitungsgerätes 1 zunächst, ob No-Go-Bereiche 6 gespeichert sind. Wenn die Steuereinrichtung dann feststellt, dass alle Umgebungsteilbereiche 2 bis 5 Teil eines No-Go-Bereiches 6 sind, wird der Reinigungsauftrag beendet bzw. abgelehnt. Diese Vorgehensweise erfolgt dann bei jedem neuen Reinigungsauftrag solange, bis der No-Go-Bereich 6 freigegeben ist, d.h. gelöscht wurde. Für das Löschen des No-Go-Bereiches 6 kann eine Bedingung vorgegeben werden, beispielsweise dass ein bestimmter Minimalzeitabstand zwischen aufeinanderfolgenden Zeitfenstern eingehalten wird, nämlich zwischen einem letzten Zeitfenster eines ersten Reinigungszyklus und einem ersten Zeitfenster eines darauffolgenden Reinigungszyklus.

### Liste der Bezugszeichen

- 1: Bodenbearbeitungsgerät
- 2: Umgebungsteilbereich
- 3: Umgebungsteilbereich
- 4: Umgebungsteilbereich
- 5: Umgebungsteilbereich
- 6: No-Go-Bereich
- 7: Basisstation
- 8: Steuereinrichtung
- 9: Rad
- 10: Antriebseinrichtung
- 11: Detektionseinrichtung
- 12: Bodenbearbeitungselement
- 13: Speicher
- 14: Kommunikationsschnittstelle

## Patentansprüche

1. Verfahren zum Betrieb eines sich selbsttätig fortbewegenden Bodenbearbeitungsgerätes (1), wobei mindestens eine von dem Bodenbearbeitungsgerät (1) in einer Umgebung auszuführende Bodenbearbeitungstätigkeit zur Ausführung in einem durch einen definierten Startzeitpunkt und eine definierte Zeitspanne gekennzeichneten ersten Zeitfenster vorgeplant wird, wobei für den Fall, dass das erste Zeitfenster nicht für die vollständige Ausführung der Bodenbearbeitungstätigkeit ausreicht, mindestens ein zweites Zeitfenster vorgeplant wird, in welchem das Bodenbearbeitungsgerät (1) die Ausführung der Bodenbearbeitungstätigkeit fortsetzt, wobei die bei Ablauf des ersten Zeitfensters nicht fertiggestellte Bodenbearbeitungstätigkeit zum Ende der definierten Zeitspanne des ersten Zeitfensters angehalten wird und bei Erreichen eines für das zweite Zeitfenster vordefinierten Startzeitpunktes fortgesetzt wird, wobei mehrere Bodenbearbeitungstätigkeiten im Rahmen eines Bearbeitungsplans definiert werden, welcher eine Reihenfolge der auszuführenden Bodenbearbeitungstätigkeiten festlegt, **dadurch gekennzeichnet, dass** der Bearbeitungsplan eine zyklisch aufeinanderfolgende Bodenbearbeitung mehrerer Umgebungsteilbereiche (2, 3, 4, 5) der Umgebung gemäß einer definierten Abfolge der Umgebungsteilbereiche (2, 3, 4, 5) vorgibt, wobei nach Fertigstellung einer Bodenbearbeitungstätigkeit in einem als letzter Umgebungsteilbereich (2, 3, 4, 5) der Abfolge definierten Umgebungsteilbereich (2, 3, 4, 5) eine erneute Bodenbearbeitung der Umgebungsteilbereiche (2, 3, 4, 5) gemäß der gesamten definierten Abfolge beginnend von einem als erster Umgebungsteilbereich (2, 3, 4, 5) der Abfolge definierten Umgebungsteilbereich (2, 3, 4, 5) erfolgt.

2. Verfahren nach Anspruch 1, **dadurch gekennzeichnet, dass** die Umgebung in eine Mehrzahl von definierten Umgebungsteilbereichen (2, 3, 4, 5) eingeteilt wird, wobei die Bodenbearbeitungstätigkeit zur Ausführung in zumindest einem bestimmten der definierten Umgebungsteilbereiche (2, 3, 4, 5) geplant wird.

3. Verfahren nach Anspruch 1 oder 2, **dadurch gekennzeichnet, dass** das Bodenbearbeitungsgerät (1) eine während der Ausführung in einem Umgebungsteilbereich (2, 3, 4, 5) angehaltene Bodenbearbeitungstätigkeit zu einem vordefinierten späteren Startzeitpunkt in demselben Umgebungsteilbereich (2, 3, 4, 5) fortsetzt.

4. Verfahren nach einem der vorhergehenden Ansprüche, **dadurch gekennzeichnet, dass** ein Umgebungsteilbereich (2, 3, 4, 5) der Umgebung, in welchem eine Bodenbearbeitungstätigkeit bereits vollständig ausgeführt wurde, als ein No-Go-Bereich (6) definiert wird, welcher von dem Bodenbereitungsgerät (1) nicht noch einmal bearbeitet werden darf solange nicht alle Umgebungsteilbereiche (2, 3, 4, 5) der Umgebung vollständig bearbeitet wurden.

5. Verfahren nach Anspruch 4, **dadurch gekennzeichnet, dass** der definierte No-Go-Bereich (6) gelöscht wird, wenn das Bodenbearbeitungsgerät alle Umgebungsteilbereiche (2, 3, 4, 5) der Umgebung vollständig bearbeitet hat.

6. Verfahren nach Anspruch 5, **dadurch gekennzeichnet, dass** der No-Go-Bereich (6) erst gelöscht wird, wenn die Zeitspanne desjenigen Zeitfensters abgelaufen ist, in welchen ein Zeitpunkt fällt, zu welchem alle Umgebungsteilbereiche (2, 3, 4, 5) der Umgebung vollständig bearbeitet sind.

7. Verfahren nach einem der vorhergehenden Ansprüche, **dadurch gekennzeichnet, dass** sich das Bodenbearbeitungsgerät (1) bei Ende eines Zeitfensters zu einer Basisstation (7) bewegt und dort ruht bis der Startzeitpunkt eines zeitlich darauffolgenden Zeitfensters erreicht ist.

8. Sich selbsttätig fortbewegendes Bodenbearbeitungsgerät (1) mit einer Steuereinrichtung (8), welche eingerichtet ist, ein Verfahren nach einem der Ansprüche 1 bis 7 auszuführen, wobei das Bodenbearbeitungsgerät (1) insbesondere ein Reinigungsgerät ist, welches eingerichtet ist, eine Bodenfläche zu reinigen.

## Claims

1. A method for operating an automatically moving floor treatment appliance (1), wherein at least one floor treatment activity to be performed by the floor treatment appliance (1) in a surrounding area is pre-planned for performance in a first time window, which is **characterized by** a defined start time and a defined time period, wherein, in the event that the first time window is not sufficient for the complete performance of the floor treatment activity, at least a second time window is pre-planned, in which the floor treatment appliance (1) continues the performance of the floor treatment activity, wherein the floor treatment activity not completed upon the expiration of the first time window is stopped at the end of the defined time period of the first time window and is continued upon reaching a start time predefined for the second time window, wherein several floor treatment activities are defined as part of a treatment plan, which establishes an order of the floor treatment activities to be performed, **characterized in that** the floor treatment plan specifies a cyclically successive floor treatment of several surrounding area subregions (2, 3, 4, 5) of the surrounding area according to a defined sequence of the surrounding area subregions (2, 3, 4, 5), wherein, after completion of a floor treatment activity in a surrounding area subregion (2, 3, 4, 5), which is defined as last surrounding area subregion (2, 3, 4, 5) of the sequence, a new floor treatment of the surrounding area subregions (2, 3, 4, 5) takes place according to the entire defined sequence, starting at a surrounding area subregion (2, 3, 4, 5), which is defined as first surrounding area subregion (2, 3, 4, 5) of the sequence.

2. The method according to claim 1, **characterized in that** the surrounding area is divided into a plurality of defined surrounding area subregions (2, 3, 4, 5), wherein the floor treatment activity is planned for performance in at least one specific one of the defined surrounding area subregions (2, 3, 4, 5).

3. The method according to claim 1 or 2, **characterized in that** the floor treatment appliance (1) continues a floor treatment activity, which was stopped during the performance in a surrounding area subregion (2, 3, 4, 5), at a predefined later start time in the same surrounding area subregion (2, 3, 4, 5).

4. The method according to one of the preceding claims, **characterized in that** a surrounding area subregion (2, 3, 4, 5) of the surrounding area, in which a floor treatment activity has already been performed completely, is defined as a no-go region (6), which must not be treated by the floor treatment appliance (1) once again, as long as all surrounding area subregions (2, 3, 4, 5) of the surrounding area have not been treated completely.

5. The method according to claim 4, **characterized in that** the defined no-go region (6) is deleted when the floor treatment appliance has completely treated all surrounding area subregions (2, 3, 4, 5) of the surrounding area.

6. The method according to claim 5, **characterized in that** the no-go region (6) is only deleted when the time period of that time window has expired, into which a time period falls, at which all surrounding area subregions (2, 3, 4, 5) of the surrounding area are completely treated.

7. The method according to one of the preceding claims, **characterized in that** at end of a time window, the floor treatment appliance (1) is moved to a base station (7) and rests there until the start time of a subsequent time window is reached.

8. An automatically moving floor treatment appliance (1) comprising a control means (8), which is configured to perform a method according to one of claims 1 to 7, wherein the floor treatment appliance (1) is in particular a cleaning appliance, which is configured to clean a floor area.

## Revendications

1. Procédé d'exploitation d'un appareil de travail du sol (1) se déplaçant de manière autonome, au moins une activité de travail du sol à exécuter par l'appareil de travail du sol (1) dans un environnement étant planifiée à l'avance pour être exécutée dans une première fenêtre temporelle **caractérisée par** un moment de démarrage défini et un laps de temps défini, dans lequel en cas la première fenêtre temporelle ne suffisant pas pour l'exécution complète de l'activité de travail du sol, au moins une deuxième fenêtre temporelle est planifiée à l'avance, dans laquelle l'appareil de travail du sol (1) poursuit l'exécution de l'activité de travail du sol, l'activité de travail du sol non terminée à l'expiration de la première fenêtre temporelle étant arrêtée à la fin de la période définie de la première fenêtre temporelle et étant poursuivie lorsqu'un instant de démarrage prédéfini pour la deuxième fenêtre temporelle est atteint, plusieurs activités de travail du sol étant définies dans le cadre d'un plan de travail qui détermine un ordre des activités de travail du sol à exécuter, **caractérisé en ce que** le plan de travail prescrit un travail du sol se succédant de manière cyclique de plusieurs zones partielles d'environnement (2, 3, 4, 5) de l'environnement selon une séquence définie des zones partielles d'environnement (2, 3, 4, 5), dans lequel, après l'achèvement d'une activité de travail du sol dans une zone partielle d'environnement (2, 3, 4, 5) définie comme dernière zone partielle d'environnement (2, 3, 4, 5) de la séquence, un nouveau travail du sol des zones partielles d'environnement (2, 3, 4, 5) est effectué conformément à l'ensemble de la séquence définie en commençant par une zone partielle d'environnement (2, 3, 4, 5) définie comme première zone partielle d'environnement (2, 3, 4, 5) de la séquence.

2. Procédé selon la revendication 1, **caractérisé en ce que** l'environnement est divisé en une pluralité de sous-zones d'environnement définies (2, 3, 4, 5), l'activité de travail du sol étant planifiée pour être exécutée dans au moins une certaine des sous-zones d'environnement définies (2, 3, 4, 5).

3. Procédé selon la revendication 1 ou 2, **caractérisé en ce que** l'outil de travail du sol (1) reprend une activité de travail du sol arrêtée pendant l'exécution dans une zone partielle d'environnement (2, 3, 4, 5) à un moment de démarrage ultérieur prédéfini dans la même zone partielle d'environnement (2, 3, 4, 5).

4. Procédé selon l'une des revendications précédentes, **caractérisé en ce qu'**une zone partielle d'environnement (2, 3, 4, 5) de l'environnement, dans laquelle une activité de travail du sol a déjà été entièrement exécutée, est définie comme une zone no-go (6), qui ne doit pas être travaillée une nouvelle fois par l'appareil de préparation du sol (1) tant que toutes les zones partielles d'environnement (2, 3, 4, 5) de l'environnement n'ont pas été entièrement travaillées.

5. Procédé selon la revendication 4, **caractérisé en ce que** la zone No-Go définie (6) est effacée lorsque l'outil de travail du sol a complètement travaillé toutes les zones partielles d'environnement (2, 3, 4, 5) de l'environnement.

6. Procédé selon la revendication 5, **caractérisé en ce que** la zone no-go (6) n'est supprimée que lorsque la période de temps de la fenêtre temporelle dans laquelle tombe un moment auquel toutes les zones partielles d'environnement (2, 3, 4, 5) de l'environnement sont entièrement traitées est écoulée.

7. Procédé selon l'une des revendications précédentes, **caractérisé en ce que** l'outil de travail du sol (1) se déplace vers une station de base (7) à la fin d'une fenêtre temporelle et s'y repose jusqu'à ce que l'heure de début d'une fenêtre temporelle suivante soit atteinte.

8. Appareil de travail du sol (1) se déplaçant automatiquement, comportant un dispositif de commande (8) qui est agencé pour exécuter un procédé selon l'une des revendications 1 à 7, l'appareil de travail du sol (1) étant notamment un appareil de nettoyage qui est agencé pour nettoyer une surface de sol.
